# EUROPÄISCHE PATENTSCHRIFT

(11) **EP 2 149 963 B1**
(45) Veröffentlichungstag und Bekanntmachung des Hinweises auf die Patenterteilung: **12.09.2012**
(21) Anmeldenummer: 09164351.0
(22) Anmeldetag: 01.07.2009
(51) Int. Cl.: H02K 1/22, H02K 1/17

(54) **Magnetspinmotor**
Magnet spin motor
Moteur à spin magnétique

(30) Priorität: 09.07.2008 CH 10712008
(43) Veröffentlichungstag der Anmeldung: 03.02.2010
(73) Patentinhaber: Kaech Motors AG, 6044 Udligenswil (CH)
(72) Erfinder: Kaech, Alfred, 5417, Untersiggenthal (CH)
(74) Vertreter: Spierenburg, Pieter

(56) Entgegenhaltungen:
- WO-A1-02/47237
- DE-U1- 29 921 874
- JP-A- 2004 147 425
- US-A- 4 972 112
- US-A1- 2008 129 136

## Beschreibung

Die Erfindung betrifft einen Magnetspinmotor nach dem Oberbegriff des Patentanspruchs 1 und ein Verfahren zum Betrieb eines solchen Magnetspinmotors nach Anspruch 6.

### STAND DER TECHNIK

In Uebereinstimmung mit den Maxwell'schen Gleichungen ist jeder nach jenen Prinzipien gebauter Elektromotor mit dem Phänomen der Selbstinduktion behaftet. Beim Lauf des Rotors wird in der Maschine durch die Magnetfelder eine innere Spannung induziert, die sich der aufgedrückten Klemmenspannung entgegenstellt. Wirksam ist dann nur noch die Differenz dieser Spannungen. Dieser grosse Bremser beschränkt automatisch das Leistungsvermögen des Motors.

JP-A-2004/147425 beschreibt eine rotierende elektrische Maschine, bei welcher das Drehmoment verbessert werden soll. Ein Rotor 1 ist befestigt auf ein nichtmagnetisches Rohr 3, welches von einem ringförmigen Magnetkörper 4 umgeben ist. Auf dem Magnetkörper 4 sind vier in gleichmäßigen Abstand zueinander (um 90°) angeordnete Permanentmagnete 5 befestigt, deren Nord- und Südpolen axial ausgerichtet sind und abwechselnd bezüglich der Nord- und Südpolen angeordnet sind. Zwischen den Permanentmagneten 5 sind nicht-magnetische Zwischenstücke 3a vorgesehen. Der Stator 6 weist einen rohrförmigen Statorkern 7 auf mit vorstehenden Polteile 8, die in gleichmässigem Abstand zueinander (um 30°) angeordnet sind. Die Polteile 8 sind von einer Spule 12 umgeben und bilden so den Elektromagneten 13. Die Magnetfelder der Elektromagneten 13 sind radial ausgerichtet und sind abwechselnd in der Feldrichtung angeordnet. Zwischen den Elektromagneten 13 sind Permanentmagneten 9 angeordnet, deren Magnetfelder kreisförmig ausgerichtet und deren Polen entsprechend den Polen (N/S) der Elektromagneten 13 vorgesehen sind. Bezüglich des Magnetpols des Stators 6 überlagert der magnetische Fluss, welcher durch den Elektromagneten 13 erzeugt wird, denjenigen der anliegenden Permanentmagneten 9. Der Rotor 1 wird angetrieben durch das Abstossen des Magnetpols des Rotors mit derselben Polarität und die Anziehung vom Magnetpols des Rotors mit entgegengesetzter Polarität.

Es handelt sich hier um einen Synchronmotor, bei welchem die Elektromagneten phasenverschoben jeweils mit einem Gleichstrompuls beaufschlagt werden.

DE-U-299 21 874 beschreibt eine elektromagnetische Maschine für ein Fahrrad, die eine Spuleneinheit an einem Fahrzeugrahmen und ein Rückschlussteil an einem Fahrzeugrad aufweist. Es handelt sich hier um einen Dynamo, der elektrische Energie erzeugen soll und nicht um einen Elektromotor. Wie in Fig. 14 beschrieben, besteht der Rotor aus zwei Permanentmagneten 51 und 52, welche gegengepolt sind und über ein Jochteil 53 magnetisch verbunden sind. Um die Permanentmagneten 51 und 52 sind Spulen 7 und 9 angeordnet, so dass die Magnetfelder der Permanentmagnete 51 und 52 und der Spulen 7 und 9 gleich ausgerichtet sind. Auf dem Stator oder Zahnkranz 3 sind vorstehende Zähne 11 vorgesehen, die mit den Permanentmagneten 51 und 52 mit den Spulen 7 und 9 den Magnetkreis schtiessen. Aus welchem Material der Zahnkranz 3 besteht, ist nicht beschrieben. Aus der Erfahrung muss jedoch davon ausgegangen werden, dass es sich um ein ferromagnetisches Material wie Eisen handelt.

Auch bei dieser elektromagnetischen Maschine wirkt eine grosse Selbstinduktion, welche den Generatorbetrieb nachhaltig beeinflusst.

### AUFGABE DER ERFINDUNG

Der vorliegenden Erfindung liegt die Aufgabe zugrunde, einen Motor zu schaffen, bei dem dieser Nachteil wesentlich kleiner ist.

### GEGENSTAND DER ERFINDUNG

Diese Aufgabe wird durch einen Magnetspinmotor mit den Merkmalen des Vorrichtungsanspruchs 1 und mit den Merkmalen des Verfahrensanspruchs 6 gelöst.

Der Aufbau entspricht im Prinzip den bekannten Bauformen eines Kollektormotors, bestehend aus einem ruhenden Teil, Stator genannt, und einem um eine Achse drehbaren Teil, Rotor genannt. Auf Rotor und Stator sind ausgeprägte Polköpfe vorgesehen. Ein Kollektor bewirkt die erforderliche Umpolung der Polköpfe z.B. diejenigen des Rotors im Moment der Koinzidenz mit jenen des Stators.
Die Neuerung betrifft insbesondere die Polköpfe, die des Rotors oder die des Stators. Sie ermöglichen eine Umpolung, ohne dass in den Schaltwicklungen eine nachhaltig bremsende Induktionswirkung auftritt.

Bei der vorliegenden Konstruktion sind die Polköpfe des Stators durchweg mit Permanent-Magneten bestückt, die des Rotors zur Hälfte. Die andere Hälfte belegt ein die Umpolung bewirkender Elektro-Magnet, dessen Feld auch am Antrieb beteiligt ist.

Betrieben wird der Motor mit Gleichstrom, wobei dieser mittels des Kollektors in drehzahlabhängigen Wechselstrom zur Speisung des Elektromagneten umgesetzt wird. Die Stromstärke ist so eingestellt, dass, je nach momentaner Polarität des Elektro-Magneten (E-Magnet genannt) dieser den einen oder den anderen der gegengepolten Permanent-Magneten (P-Magnet genannt) zu einem magnetisch geschlossenen Kreis neutralisiert, während zugleich das Feld des anderen P-Magneten, in diesem Fall gleichgepolt zum Feld des E-Magneten, verdoppelt wird und beide gemeinsam zum Antrieb beitragen.

Die Phasenlage des Wechselstromes, einstellbar am Kollektor, ist so getroffen, dass die über den Luftspalt jeweils korrespondierenden Polköpfe sich bei Feldeinlauf anziehen, beim Feldauslauf abstossen, wodurch ein gleichsinniges Drehmoment entsteht.

### BESCHREIBUNG EINES AUSFÜHRUNGSBEISPIELES DER ERFINDUNG

Weitere Vorteile der Erfindung ergeben sich aus der nachfolgenden Beschreibung, in welcher die Erfindung anhand eines in den schematischen Zeichnungen dargestellten Ausführungsbeispieles näher erläutert wird, und aus den abhängigen Patentansprüchen. Es zeigt:
- Fig. 1: einen Rotor des Motors in verschiedenen Ansichten,
- Fig. 2: das Schaltprinzip in drei Positionen beim Umlauf des Rotors,
- Fig. 3: eine Frontansicht des Motors im Moment eines Poldurchganges, und
- Fig. 4: eine Seitenansicht des Motors der Figur 3.

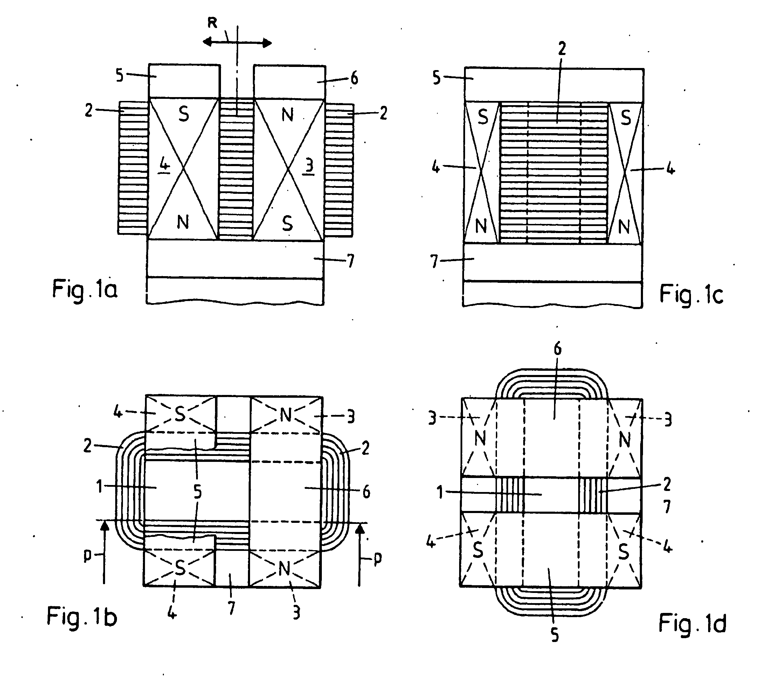

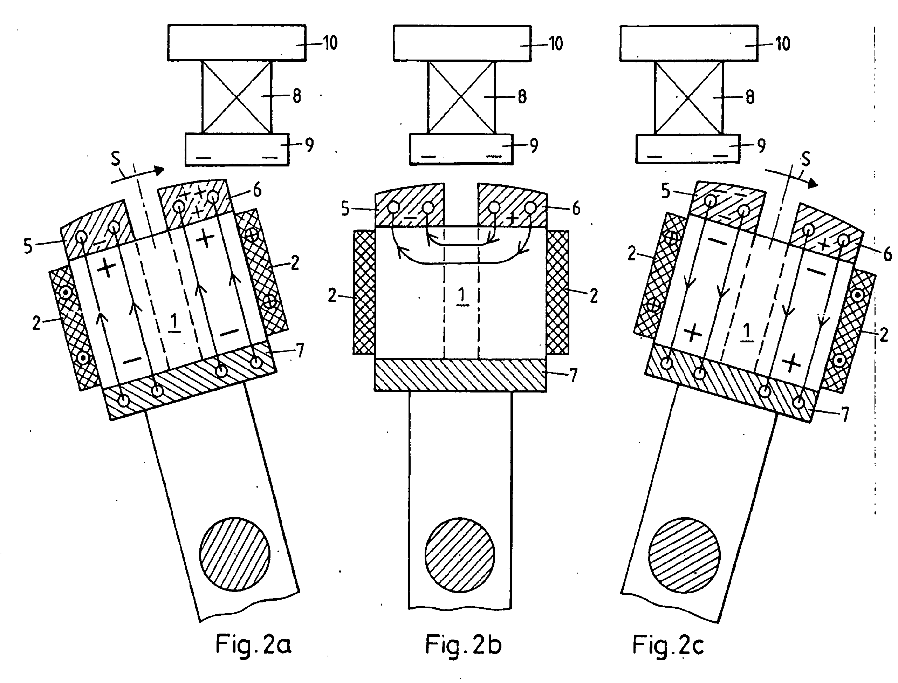

In den Figuren 1a bis 1d ist das Konzept des erfindungsgemässen Rotors näher illustriert. Die Figuren 1a bis 1d zeigen den Aufbau eines Polkopfes und die Figuren 2a bis 2c das Schaltprinzip in drei Positionen beim Umlauf des Rotors.

Fig. 1a zeigt eine Frontansicht, Figur 1b die Draufsicht gemäss Figur 1a, sowie Figur 1c eine Seitenansicht und Figur 1d die Draufsicht gemäss Figur 1c. Der die Umpolung bewirkende E-Magnet mit einem Kern 1 und einer Drahtspule 2 befinden sich im Zentrum des Polkopfes. Aussen herum, eng anliegend, sind vier Permanent-Magnete (P-Magnete) gruppiert, nämlich die zwei gleichgepolten P-Magnete 3 und die ebenfalls gleichgepolten P-Magnete 4. Beide Paare sind gegengepolt. Sie sind zudem je mit Laschen 5 und 6 magnetisch verbunden, welche zugleich mit dem Kern 1 des E-Magneten in magnetischer Verbindung stehen. Eine Konsole 7 auf der abgewandten Seite bewirkt den magnetischen Schluss für alle Magnete.

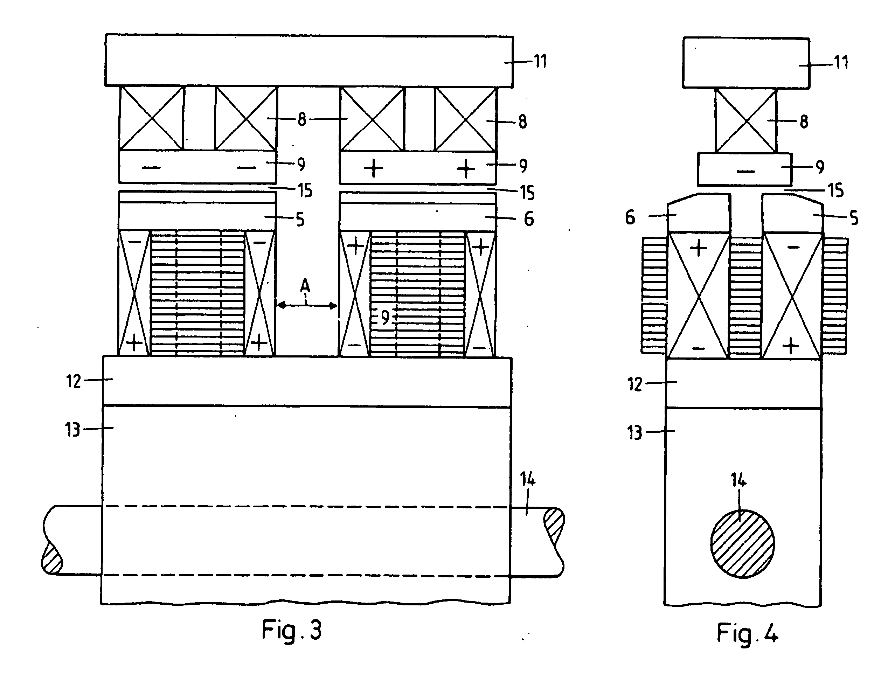

Wicklung und Steuerstrom sind so gewählt, dass das Feld des E-Magneten, je nach Polarität, stets dasjenige der komplementären Lasche, mindestens angenähert (gleiche Durchflutung), zu einem magnetisch geschlossenen Kreis ergänzt, während zugleich das Feld der anderen Lasche, verstärkt durch das in Opposition stehende Feld des E-Magneten, im Sinne eines über den Luftspalt magnetisch geschlossenen Kreises den Antrieb bewirkt (siehe Figuren 3 und 4). Die möglichen Drehrichtungen sind in Fig. 1a mit R markiert.

Das Wechselspiel der Magnetfelder betreffend Umpolung und Antrieb ist in den Figuren 2a bis 2c dargestellt. Die Ansicht der Polköpfe entspricht dem Schnitt p-p in Figur 1b. Hinzu kommen noch ein mitwirkender Stator-P-Magnet 8 mit einer Polkappe 9 und einer Konsole 10. Gezeigt ist der erfindungsgemässe Polkopf in drei Positionen beim Durchqueren des Statorfeldes: in Figur 2a beim Einlauf zum P-Magneten 8, in Figur 2b beim Durchlauf und in Figur 2c beim Verlassen des P-Magneten. Die eingetragenen Polaritäten sind willkürlich; sie könnten ebenso umgekehrt sein. Die Laufrichtung ist mit dem Pfeil S angedeutet. Die Polfläche des P-Magneten 8 ist etwa gleich gross (bei gleichen Feldstärken) wie die gesamten Polflächen der P-Magnete 3 und 4 auf dem Rotor. Allfällige Schraubverbindungen sind weggelassen.

Die Laschen 5 und 6 haben, von ihren P-Magneten her, in allen drei Positionen des Rotors stets die gleichen Polaritäten; -Pol links +Pol rechts. Es wird angenommen, dass der P-Magnet 8 gegen den Rotor hin ein -Pol ist. Der E-Magnet hat dann den +Pol oben. Er ergänzt nunmehr das -Feld der Lasche 5 zu einem vollständigen magnetischen Kreis. Die Lasche 5 ist dann aussenseitig, bei genügender Dicke, feldfrei. Die Lasche 6, gleichgepolt zum Feld des E-Magneten, verdoppelt die Durchflutung zum Statormagneten 8. In Fig.2b (Polwechsel) ist der E-Magnet wegen Stromunterbruch kurzzeitig feldfrei. Die gegengepolten Felder der Laschen 5 und 6 schliessen sich über den Kern 1 zu einem in Prinzip vollen magnetischen Kreis. Die Aussenflächen beider Laschen sind nahezu feldfrei.

In Fig. 2c bewirkt die Lasche 6 den magnetischen Ausgleich; sie ist aussenseitig feldfrei. Die Lasche 5 steht nunmehr in Opposition zum Feld des E-Magneten und verdoppelt mit jenem Feld die Abstossungskraft zum P-Magneten 8.

Beobachtungen haben ergeben, dass ein Feldausgleich der gegengepolten Laschen 5 und 6 über den Kern 1 nur bei feldfreiem Zustand des E-Magneten auftritt, nicht aber während dessen Betriebszustand (Ausschliessungseffekt).

Die in einer Umlaufebene des Rotors etablierten Stator-P-Magnete sind durchweg gleichgepolt. Beim Lauf des Rotors zum nächsten Stator-P-Magneten wird der E-Magnet, etwa auf halbem Weg, wieder rückgepolt und das Wechselspiel der Magnetfelder beginnt von neuem. Die Schaltfrequenz ist daher doppelt so hoch wie die Umlauffrequenz des Rotors.

Der zugehörige Kollektor ist vierteilig, wobei je zwei diametral gegenüberliegende Segmente elektrisch leitend verbunden sind. Beim Uebergang von einem Segment zum nächsten befindet sich dort jeweils eine neutrale Lamelle , so dass beim Wechsel der Stromrichtung ein kurzzeitiger Stromunterbruch entsteht. Die zwei erforderlichen Kollektorbürsten sind auf der Bürstenbrücke um 90° versetzt und allenfalls noch azimutal verschiebbar, so dass ein optimales Drehmoment eingestellt werden kann.

Die Wirkungen können unter Umständen grösser sein, falls zwischen den Laschen und den Magnetoberflächen ein keiner Abstand besteht. Eine dünne Folie (0,01 mm) als Zwischenlage genügt. Die drei Stirnflächen, die des E-Magneten und die zwei der P-Magnete brauchen nicht exakt auf gleicher Ebene zu sein. Der Abstand des E-Magneten zu den Laschen kann auch etwas grösser sein (0,1 bis 0,3 mm), was allerdings eine grössere Schaltleistung zur Folge hat.

Die magnetischen Prozesse sind effektiv verwickelter als hier dargelegt. Die Gleichfelder der P-Magnete 3 und 4 bzw. die in den Laschen 5 und 6 sind mindestens im Bereich der überquerten Drahtspule z.T. axial gerichtet. Im Bereich des E-Magneten werden diese axialen Gleichfelder in radiale Wechselfelder umgelenkt. Auch beim Uebergang zu den Statormagneten sind radiale Feldkomponenten vorhanden. In der den Antrieb bewirkenden Durchflutung sind die P-Magnete zu 3/4 und der E-Magnet zu 1/4 beteiligt (ein besonderes Merkmal!). Infolge des relativ geringen Einflusses des E-Magneten auf das Drehmoment fällt auch die das Leistungsvermögen bremsende Selbstinduktion kaum ins Gewicht.

Der Aufbau der Polköpfe erfordert auch Massnahmen gegen anfällige Wirbelströme. Besonders davon betroffen sind der Kern 1 und die Laschen 5 und 6. Bewährte Mittel dagegen sind unter anderem Blechpakete mit Zwischenisolation, aber auch Stoffe mit speziell schlechter elektrischer Leitfähigkeit wie z.B. Ferrite.

Zudem muss eine vom Rotor zum Stator gelangende Durchflutung einen den magnetischen Kreis schliessenden Rückweg zum Rotor haben. Hierzu ist neben jedem Polkopf, axial leicht versetzt, ein gleicher, gegengepolter Polkopf (mit Gegenpolen auf dem Stator) angeordnet. Die paarweise magnetisch wirkenden Rotor- und Statormagnete haben je, auf den zum Luftspalt abgewandten Seiten, gemeinsame Konsolen, womit deren magnetischer Kreis geschlossen ist.

Die soeben offengelegte Kombination im Moment eines Poldurchganges ist in Figur 3 in einer Frontansicht, in Figur 4 in einer Seitenansicht dargestellt. Die Bauteile sind bis und mit Index 9 (ohne 7) die gleichen wie gemäss den Figuren 1 und 2 beschrieben. Die zumindest angenähert identisch gleichen Polköpfe sind je ein gegengepoltes Paar (einschliesslich der Statormagnete) im relativ geringem axialen Abstand A auf den Konsolen 11 und 12 befestigt. Weiterhin ist die Konsole 12 über den Zentriersockel 13 mit der Rotorwelle 14 verbunden. Der magnetische Schluss über den Luftspalt 15 bei Koinzidenz der Polköpfe von Rotor und Stator ist offensichtlich.

Die Richtung des Drehmomentes (Links- oder Rechtslauf) des zweiten, durchweg gegengepolten Magnetsystems (siehe Fig. 3) stimmt zwangsläufig mit jener des ersten Magnetsystem überein. Das ursprüngliche Drehmoment wird verdoppelt.

## Patentansprüche

1. Magnetspinmotor, bestehend aus einem festen Teil, Stator genannt, und einen, um eine Achse drehbaren, bezüglich des Stators konzentrisch wirkenden Teil, Rotor genannt, wobei Rotor und Stator durchweg mit ausgeprägten Polköpfen bestückt sind, die über einen Luftspalt in magnetischer Wechselwirkung stehen, **dadurch gekennzeichnet, dass** entweder bei einem ersten Rotor jeder Polkopf mindestens einen Umpolungen des Polkopfes bewirkenden Elektromagneten (1, 2) und anbei mindestens zwei, jeweils gegengepolte, Permanentmagnete (3, 4) enthält und bei einem zugehörigen ersten Stator die Polköpfe durchweg mit jeweils gleichgepolten Permanent-magneten (8) bestückt sind, oder bei einem zweiten Stator jeder Polkopf mindestens einen Umpolungen des Polkopfes bewirkenden Elektromagneten und anbei mindestens zwei, jeweils gegengepolte, Permanentmagnete enthält und bei einem zugehörigen zweiten Rotor die Polköpfe durchweg mit jeweils gleichgepolten Permanentmagneten bestückt sind.

2. Magnetspinmotor nach Anspruch 1, **dadurch gekennzeichnet, dass** der Elektromagnet (1, 2), welcher einen kern (1) und eine Erregerspule (2) aufweist, zumindest angenähert im Zentrum des Polkopfes gelagert ist und die Permanentmagnete (3, 4) ausserhalb der Erregerspule (2) angebracht sind.

3. Magnetspinmotor nach Anspruch 2, **dadurch gekennzeichnet, dass** der Elektromagnet (1, 2) und die Permanentmagnete (3, 4) auf der zum Luftspalt abgewandten Seite magnetisch verbunden sind und dass die Permanentmagnete (3, 4) auf der dem Luftspalt zugewandten Seite, in diskretem gegenseitigen Abstand, mit dem Kern (1) des Elektromagneten magnetisch verbunden sind.

4. Magnetspinmotor nach einem der Ansprüche 1 bis 3, **dadurch gekennzeichnet, dass** ein Kollektor und Schleifringe zur Umpolung vorgesehen sind.

5. Magnetspinmotor nach einem der Ansprüche 1 bis 4 **dadurch gekennzeichnet, dass** neben jedem ersten Polkopf, axial versetzt (A), ein zweiter, mechanisch gleicher Polkopf angebracht ist, wobei jeder Magnet des zweiten Polkopfes zu jenem des ersten Polkopfes gegengepolt ist und diese Polkopfpaare auf den zum Luftspalt abgewandten Seiten je über Konsolen (11, 12) magnetisch verbunden sind.

6. Verfahren zum Betrieb eines Magnetspinmotors nach einem der Ansprüche 1 bis 5, **dadurch gekennzeichnet, dass** der Erregerstrom des Elektromagneten (1, 2) so hoch gewählt ist, dass das Wechselfeld des Elektromagneten das Feld des einen Permanentmagneten (4, 5) zu einem magnetisch geschlossenen Kreis neutralisiert, während zugleich das Feld des anderen Permanentmagneten (3, 5) verdoppelt wird.

7. Verfahren nach Anspruch 6, **dadurch gekennzeichnet, dass** die Schaltfrequenz, mit welcher der Elektromagnet (1, 2) umgepolt wird, doppelt so hoch ist wie die Umlauffrequenz des Rotors.

8. Verfahren nach Anspruch 7, **dadurch gekennzeichnet, dass** die Schaltfrequenz, synchron mit der Drehzahl des Rotors, mittels Kollektor und Schleifringe erzeugt wird.

## Claims

1. A magnet spin motor, consisting of a fixed part, the so-called stator, and a part which acts concentrically with respect to the stator and is rotatable about an axis, the so-called rotor, with rotor and stator being consistently equipped with distinct pole heads which are in magnetic interaction via an air gap, **characterized in that** either in a first rotor every pole head contains at least one electromagnet (1, 2) causing a pole reversal of the pole head and at least two attached, respectively antipolar permanent magnets (3, 4), and in an associated first stator the pole heads are consistently equipped with respectively homopolar permanent magnets (8), or in a second stator every pole head contains at least one electromagnet causing a pole reversal of the pole head and attached at least two, respectively antipolar permanent magnets, and in an associated second rotor the pole heads are consistently equipped with respectively homopolar permanent magnets.

2. A magnet spin motor according to claim 1, **characterized in that** the electromagnet (1, 2), comprising a core (1) and an exciter coil (2), is mounted at least approximately in the center of the pole head and the permanent magnets (3, 4) are attached outside of the exciter coil (2).

3. A magnet spin motor according to claim 2, **characterized in that** the electromagnet (1, 2) and the permanent magnets (3, 4) are magnetically connected on the side facing away from the air gap, and that the permanent magnets (3, 4) are magnetically connected with the core (1) of the electromagnet on the side facing the air gap, at a discrete mutual distance.

4. A magnet spin motor according to one of the claims 1 to 3, **characterized in that** a collector and slip rings are provided for pole reversal.

5. A magnet spin motor according to one of the claims 1 to 4, **characterized in that** a second, mechanically similar pole head is attached adjacent to each first pole head in an axially offset manner (A), with each magnet of the second pole head being antipolar to the one of the first pole head, and said pairs of pole heads being respectively magnetically connected via brackets (11, 12) on the sides facing away towards the air gap.

6. A method for operating a magnet spin motor according to one of the claims 1 to 5, **characterized in that** the exciting current of the electromagnet (1, 2) is chosen at such a high level that the alternating field of the electromagnet neutralizes the field of the one permanent magnet (4, 5) into a magnetically closed circle, whereas at the same time the field of the other permanent magnet (3, 5) is doubled.

7. A method according to claim 6, **characterized in that** the switching rate with which the electromagnet (1, 2) changes poles is twice as high as the rotational frequency of the rotor.

8. A method according to claim 7, **characterized in that** the switching rate is generated synchronously with the speed of the rotor by means of collector and slip rings.

## Revendications

1. Moteur à spin magnétique composé d'une partie fixe appelée stator et d'une partie capable de rotation, concentrique du stator et appelée rotor, dans lequel le rotor et le stator sont garnis de façon continue de bornes polaires en relief qui sont en interaction magnétique par l'intermédiaire d'un entrefer, **caractérisé en ce que** soit, sur un premier rotor, chaque borne polaire contient au moins un électroaimant (1, 2) qui provoque des inversions de polarité de la borne polaire et avec celui-ci au moins deux aimants permanents (3, 4) de pôles opposés par paire et, sur un premier stator correspondant, les bornes polaires sont équipées de façon continue d'aimants permanents (8) de même polarité, soit, dans un deuxième stator, chaque borne polaire contient au moins un électroaimant qui provoque des inversions de polarité de la borne polaire et avec celui-ci au moins deux aimants permanents de pôles opposés par paire et, sur un premier stator correspondant, les bornes polaires sont équipées de façon continue d'aimants permanents de même polarité.

2. Moteur à spin magnétique selon la revendication 1, **caractérisé en ce que** l'électroaimant (1, 2), compartant un noyau (1) et une bobine d'excitation (2), est supporté au moins approximativement au centre de la borne polaire et les aimants permanents (3, 4) sont disposés à l'extérieur de la bobine d'excitation (2).

3. Moteur à spin magnétique selon la revendication 2, **caractérisé en ce que** l'électroaimant (1, 2) et les aimants permanents (3, 4) sont reliés magnétiquement sur le côté opposé à l'entrefer et **en ce que** les aimants permanents (3, 4) sont reliés magnétiquement au noyau (1) de l'électroaimant sur le côté tourné vers l'entrefer, à une distance mutuelle discrète.

4. Moteur à spin magnétique selon l'une des revendications 1 à 3, **caractérisé en ce qu'**un collecteur et des bagues collectrices sont prévus pour l'inversion de polarité.

5. Moteur à spin magnétique selon l'une des revendications 1 à 4, **caractérisé en ce qu'**il est prévu à côté de chaque première borne polaire, décalée axialement (A), une deuxième borne polaire identique mécaniquement, chaque aimant de la deuxième la borne polaire étant de polarité opposée à celui de la première borne polaire et ces paires de bornes polaires étant reliées magnétiquement par des consoles (11, 12) sur les côtés opposés à l'entrefer.

6. Procédé d'exploitation d'un moteur à spin magnétique selon l'une des revendications 1 à 5, **caractérisé en ce que** le courant d'excitation de l'électroaimant (1, 2) est choisi de telle façon que le champ alternatif de l'un des aimants permanents (4, 5) soit neutralisé dans un circuit fermé magnétique tandis que le champ de l'autre aimant permanent (3, 5) est doublé.

7. Procédé selon la revendication 6, **caractérisé en ce que** la fréquence de commutation à laquelle la polarité de l'électroaimant (1, 2) est inversée est deux fois plus élevée que la fréquence de révolution du rotor.

8. Procédé selon la revendication 7, **caractérisé en ce que** la fréquence de commutation est produite en synchronisation avec la vitesse de rotation du moteur au moyen du collecteur et des bagues collectrices.
